# EUROPEAN PATENT SPECIFICATION

(11) **EP 1 153 999 B1**
(45) Date of publication and mention of the grant of the patent: **23.05.2012**
(21) Application number: 00963004.7
(22) Date of filing: 29.09.2000
(51) Int. Cl.: C09D 201/00, C09D 1/00, C09D 5/00, C09D 7/12, B01J 21/06, B01J 35/02, B01J 35/00

(54) **PHOTOCATALYTIC COATING COMPOSITION AND PRODUCT HAVING THIN PHOTOCATALYTIC FILM**
PHOTOKATALYTISCHE ZUSAMMENSETZUNG FÜR BESCHICHTUNGEN UND PRODUKTE MIT EINER DÜNNEN PHOTOKATALYTISCHEN BESCHICHTUNG
COMPOSITION DE REVETEMENT PHOTOCATALYTIQUE ET PRODUIT AYANT UN FILM PHOTOCATALYTIQUE MINCE

(30) Priority: 30.09.1999 JP 27807199
(43) Date of publication of application: 14.11.2001
(73) Proprietor: SHOWA DENKO K.K., Tokyo 105-8518 (JP)
(72) Inventor: SANBAYASHI, Masayuki, Showa Denko Kabushiki Kaisha, Chiba-shi, Chiba 267-0056 (JP); OHMORI, Masahiro, Showa Denko Kabushiki Kaisha, Chiba-shi, Chiba 267-0056 (JP)
(74) Representative: Strehl Schübel-Hopf & Partner
(86) International application number: PCT/JP2000/006799
(87) International publication number: WO 2001/023483

(56) References cited:
- EP-A- 0 866 101
- EP-A- 1 016 459
- EP-A1- 0 633 064
- WO-A1-98/03607
- JP-A- 7 232 080
- JP-A- 8 164 334
- JP-A- 10 237 353
- JP-A- 2000 119 552

## Description

### TECHNICAL FIELD

This invention relates to a photocatalytic coating composition providing a thin film exhibiting excellent photocatalytic activity without giving interference color; and to an article having, on its surface, a thin film formed from the photocatalytic coating composition.

### BACKGROUND ART

Recently, articles having a titanium oxide coating formed thereon exhibiting a photocatalytic activity have been used in a variety of fields in order to prevent staining by means of removing a harmful substance; to decompose pollutants in the air for removal, and to sterilize bacteria. When irradiated with light, photocatalytic titanium dioxide exhibits activity for a redox reaction in the irradiated area. Therefore, photocatalytic titanium oxide is used in such a state that it is held on an exposed surface of a substrate. In order to maximize the effect of titanium oxide held on a substrate, a coating of titanium oxide is applied onto a surface of the substrate, so that the titanium oxide forms a thin film. Examples of articles on which titanium oxide is held in such a manner include an illumination lamp, a mirror, and window glass used for deodorization and stain-proofing.

One method for forming titanium oxide thin film is application of a coating composition containing titanium oxide and a binder onto a surface of a substrate through a method such as spray-coating, dip-coating, flow-coating, spin-coating, roll-coating, or brush-coating, followed by drying and/or firing.

The thus-formed thin film formed through coating generally has an uneven thickness. In addition, difference in refractive index between the film and the substrate gives interference colors, resulting in undesirable appearance. Particularly in these days, environmental cleanliness of living space is a growing concern, and interior products having a titanium oxide thin film thereon have been more widely used. Thus, there is still demand for mitigating the drawback in appearance.

Meanwhile, when a high-refractive-index hard coat is formed on a surface of a transparent substrate such as transparent plastic or glass, there has been proposed formation of a hard coat film by use of particles of composite oxide comprising titanium oxide, silicon oxide, and zirconium oxide and/or aluminum oxide so as to prevent generation of interference bands given by difference in refractive index between a substrate and the hard coat film (Japanese Unexamined Patent Publication (*kokai*) No. H8-48940/1996).

However, when titanium oxide is used in the form of such composite oxide particles so as to provide a photocatalytic coating film, the photocatalytic activity of titanium oxide is manifested insufficiently, which is disadvantageous.

In order to impart hydrophilicity and durability to a photocatalytic titanium oxide film, there has been proposed a photocatalytic coating film which is made of a composite material containing titania and an amorphous metal oxide and having incorporated therewith finely divided particles of silica and/or alumina therein (Japanese Unexamined Patent Publication (*kokai*) No. H10-68092/1998). This photocatalytic coating film is formed by applying onto a substrate a composite sol liquid containing a titania sol capable of being dehydration-polycondensed, a metal oxide sol capable of forming an amorphous metal oxide by dehydration-polycondensation, and a colloidal solution of silica and/or alumina, followed by firing. The coating film formed of a composite material of titania and an amorphous metal oxide and finely divided particles of silica and/or alumina effectively enhances hydrophilicity and durability, but, interference colors cannot be prevented.
EP 1016459 A1 discloses a titanium oxide-based photocatalyst comprising mainly titanium oxide and crystalline zirconium titanate. The titanium oxide and crystalline zirconium titanate bind strongly to each other in an integrated state.
EP 0 886101 A1 discloses a photocatalyst coating material containing a photocatalyst and a zirconium compound and/or a tin compound for endowing alkali resistance.

### DISCLOSURE OF THE INVENTION

In view of the aforementioned problems involved in the prior art, an object of the present invention is to provide a photocatalytic titanium oxide coating composition which provides a thin film exhibiting excellent photocatalytic activity without giving interference color.

The present inventors have found that when a small amount of particles of an inorganic compound other than titanium oxide (or particles of an organic compound convertible to particles of an inorganic compound during firing of a coating film), which particles have a relatively large particle diameter, is incorporated in a coating composition containing photocatalytic titanium oxide, a thin film exhibiting excellent photocatalytic activity and no interference color is formed. The present invention have been completed on the basis of this finding.

Accordingly, in one aspect of the present invention, there is provided a photocatalytic titanium oxide coating composition comprising (a) titanium oxide particles exhibiting photocatalytic activity, (b) particles of an inorganic compound other than titanium oxide, or particles of an organic compound convertible to particles of the inorganic compound on firing, (c) a binder, and (d) a solvent, characterized in that the particles of an inorganic compound have an average particle diameter which is larger than that of the titanium oxide particles and falls within the range of 0.1 µm to 1.0 µm; the inorganic compound particles are insoluble in the solvent; and the amount of the inorganic compound particles is in the range of 0.5% to 7% by weight based on the weight of the titanium oxide particles, wherein the titanium oxide particles have an average particle diameter of 0.004 µm to 0.1 µm.

In another aspect of the present invention, there is provided an article comprising a substrate and a photocatalytic titanium oxide thin film formed on a surface of the substrate, which thin film is formed from the above-mentioned photocatalytic titanium oxide coating composition of the invention.

### BEST MODE FOR CARRYING OUT THE INVENTION

The photocatalytic titanium oxide coating composition of the invention, and the article having a photocatalytic titanium oxide thin film of the invention will be described in detail.

The titanium oxide particles exhibiting photocatalytic activity, used in the invention, exhibit photocatalytic activity predominantly for a redox reaction of an organic compound, when irradiated with light having energy greater than a band gap between a conduction band and a valence band of a titanium oxide crystal. The titanium oxide particles used in the invention are preferably crystalline particles. Although the crystal structure may be of anatase type, rutile type, or brookite type, brookite type is particularly preferred.

However, since titanium oxide particles exhibiting excellent photocatalytic activity are preferred, the titanium oxide particles have a small particle diameter. Fine titanium dioxide particles having an average particle diameter smaller than 0.004 µm are difficult to produce, and the finely divided particles used have an average particle diameter of 0.004 µm to 0.1 µm, preferably 0.005 µm to 0.1 µm and more preferably 0.006 µm to 0.09 µm. The titanium oxide particles have a specific surface area of preferably at least 20 m²/g, and more preferably 50 m²/g to 300 m²/g.

In order to prepare the coating composition of the invention, commercially available titanium oxide powder may be used, but, a titanium oxide sol, i.e., an aqueous titanium oxide dispersion, obtained by a titanium oxide synthesis process as described below is preferably used.

Examples of the methods for synthesizing titanium oxide include neutralization and hydrolysis of titanyl sulfate or titanium tetrachloride, and hydrolysis of a titanium alkoxide compound. Of these, a method using titanyl sulfate or titanium tetrachloride as a raw material is preferred, in view of high activity of the produced titanium oxide and low production cost. Although a method involving hydrolysis of titanium alkoxide compound is advantageous in that a sol of very fine titanium oxide powder having excellent powder characteristics can be obtained, the production cost is much higher than that of a method using titanyl sulfate or titanium tetrachloride as a raw material.

The aqueous sol obtained through hydrolysis is dried to thereby provide finely divided titanium oxide powder, and the titanium oxide powder is re-dispersed in water or a water/organic solvent mixture to thereby provide a coating liquid for forming a titanium dioxide thin film. However, this method is not advantageous. This is because titanium oxide, a hydrolysis product, exhibits high surface activity, and the finer the titanium dioxide particles, the stronger the surface activity. Therefore, the particles are easily flocculated, and re-dispersion in water or water/organic solvent mixture is very difficult. Thus, a thin film formed from the dispersion exhibits poor transparency and reduced photocatalytic activity, and tends to be weakly adhered on a substrate. Therefore, an aqueous sol obtained by hydrolysis is preferably dechlorinated and dehydrated or diluted according to the need, and, thereafter, is used for preparing a coating composition.

The present inventors have already filed a patent application in connection with a preferred titanium oxide sol (Japanese Patent Application No. H10-132195/1998). This sol contains a chloride ion, plus a nitrate ion and/or a phosphate ion. Particularly, the sol contains a nitrate ion and/or a phosphate ion in an amount of 0.1 mol to 200 mol per mol of a chloride ion. The total amount of these ions is in the range of 50 ppm to 10,000 ppm. The sol contains brookite-type titanium dioxide which serves as a predominant component and has an average particle diameter of 0.01 µm to 0.1 µm and a specific surface area of at least 20 m²/g. By use of the sol, a titanium oxide thin film exhibiting excellent transparency and peel strength can be formed on a substrate.

The coating composition preferably contains the titanium oxide particles in an amount of 1% to 25% by weight based on the total amount of the composition. When the amount is smaller than 1% by weight, photocatalytic activity is insufficient. In contrast, when the amount is in excess of 25% by weight, dispersibility of titanium dioxide particles is reduced to thereby enhance the viscosity of the composition and render the composition unstable.

The particles of an inorganic compound other than titanium oxide incorporated in the photocatalytic coating composition of the invention have a relatively large average particle diameter so as to give a thin film not exhibiting interference color. More specifically, the particles of the inorganic compound incorporated in the composition have an average particle diameter larger than that of titanium oxide particles and falling within the range of 0.1 µm to 1.0 µm. When the average particle diameter of the particles of the inorganic compound is too small, elimination of interference color is not sufficiently attained. When a large amount of the inorganic compound particles of small size are incorporated, interference color is eliminated to some extent, but photocatalytic activity of titanium oxide is deteriorated. In contrast, when inorganic compound particles of excessively large particle size are incorporated, hardness and transparency of the formed thin film are greatly deteriorated.

The composition contains the aforementioned inorganic compound particles in an amount of 0.5% to 7% by weight, preferably 0.5% to 5% by weight, based on the amount of finely divided titanium oxide particles. When the amount of inorganic compound particles is too small, effect of eliminating interference colors is insufficiently attained. In contrast, whereas when the content of inorganic compound particles is too large, the thin film becomes opaque, and the transparency of the film is lowered.

No particular limitation is imposed on the species of inorganic compound particles so long as the particle diameter falls within the above-described range and the particles are insoluble in the solvent contained in the composition. Any inorganic compound particles may be used, regardless of the photocatalytic ability thereof. Examples of usable inorganic compounds include oxides, carbonates, sulfides, iodides, bromides, sulfates, peroxides, hydroxides, perchlorates, carbides, nitrides and borides. Of these, an oxide and a hydroxide of aluminum, silicon, zinc and zirconium are preferred, with the oxides being more preferred. Aluminum oxide and zirconium oxide are especially preferred.

The process for producing particles of the inorganic compound is not particularly limited; the particles may be produced through a conventionally known method, and highly dispersible finely divided particles produced through vapor phase growth are suitably used.

Particles of an organic compound may be used instead of particles of the aforementioned inorganic compound, so long as the organic compound particles are convertible to the inorganic compound particles under firing conditions employed in a firing step of the applied composition in the process for making a photocatalytic thin film from the composition. Examples of such organic compounds include organic acid salts such as acetates, citrates and oxalates. The average particle diameter of organic compound particles and the amount of organic compound particles contained in the composition are chosen so that the average particle diameter of the inorganic compound particles produced through firing and the amount as reduced to the produced inorganic compound particles satisfy the aforementioned requirements. The firing temperature required for converting particles of the organic compound to particles of the inorganic compound varies depending on the species of organic compound particles. For example, the aforementioned organic acid salts are generally fired at 250°C or higher, preferably at about 300°C.

The aforementioned inorganic compounds and organic compounds may be used either alone or as a combination of two or more thereof.

A binder is used to enhance adhesion of the titanium oxide particles and inorganic compound particles, and to form a thin film of high strength and hardness. At least one kind of compound containing phosphorus or zirconium is preferably used as a binder. Examples of the zirconium-containing compounds include water-soluble zirconium compounds such as zirconium oxychloride, zirconium hydroxychloride, zirconium nitrate, zirconium sulfate, zirconium acetate, and ammonium zirconium carbonate; and organic solvent-soluble zirconium compounds such as zirconium propionate. Furthermore, there may also be used complexes of a zirconium compound having at least one group selected from a hydroxy group, a carbonate group, or an alkylcarboxyly group; or polymers thereof. Examples of the phosphorus-containing compounds include phosphoric acid, polyphosphoric acid and aluminum phosphate.

The zirconium compound serving as a binder may be incorporated in an amount of 3% to 30% by weight, preferably 5% to 20% by weight, as reduced to zirconia (ZrO₂), based on the titanium dioxide particles. The phosphorus-containing compound serving as a binder may be incorporated in an amount of 1% to 30% by weight, as reduced to PO₄, based on the titanium oxide particles. When the amount of the binder is too small, the strength and hardness of the produced thin film are disadvantageously low. In contrast, when the amount of the binder is excessive, the photocatalytic activity is poor.

The solvent used for preparing the coating composition of the invention is capable of dissolving a binder without dissolving the titanium oxide particles and the aforementioned inorganic compound particles. The solvent is selected from among water and organic solvents, the organic solvents preferably being hydrophilic. As examples of the hydrophilic organic solvents, there can be mentioned monohydric alcohols such as methanol, ethanol, propanol and butanol; polyhydric alcohols such as ethylene glycol, diethylene glycol and glycerin; ketones such as acetone and methyl ethyl ketone; esters such as ethyl acetate and butyl acetate; and cellosolves such as ethyl sollosolve and ethyl cellosolve. The solvent may be used either alone or as a combination of two or more thereof. The solvent is preferably selected in consideration of stability of the composition, species of the substrate, drying conditions for the film-formation, production cost and other factors.

The amount of the solvent in the composition is not particularly limited, and, when the composition is coated on a substrate, the composition preferably has a viscosity suitable for coating operation.

Other than the aforementioned components, an arbitrary component may be incorporated in the coating composition of the invention. For example, in order to manifest an enhanced film-forming property upon application of the composition, the coating composition may have a surface active agent incorporated therein. The surface active agent is preferably added in an amount of 0.001% to 0.1% by weight based on the total amount of the composition. Examples of the surface active agents include anionic surfactants such as sodium lauryl sulfate, sodium dodecylbenzenesulfonate, sodium alkylnaphthalenesulfonate, sodium dialkylsulfosuccinate, sodium polyoxyethylene lauryl ether sulfate and polycarboxylic acids; and nonionic surfactants such as polyoxyethylene lauryl ether and polyoxyethylene octyl phenyl ether.

The coating composition of the invention is applicable to a surface of any of a variety of materials, to thereby form a thin film. For example, the composition is applicable to glass, plastics, ceramics and metal, and is especially applicable to glass for which high transparency is required.

The coating composition of the invention is applied onto a surface of a substrate by any known method to thereby form a thin film. The coating methods include, for example, spray-coating, dip-coating, flow-coating, spin-coating, roll-coating, brush-coating and sponge-coating. The amount of applied composition is preferably in the range of 0.05 µm to 0.8 µm, in terms of the thickness of an as-formed liquid film. When the thickness is smaller than 0.05 µm, photocatalytic activity is disadvantageously poor for practical use. In contrast, when the thickness is in excess of 0.8 µm, the film becomes opaque.

After application of the composition, the coating film may be dried at room temperature. However, when the film is required to exhibit enhanced strength, the film is preferably hardened with heat at a temperature of 80°C to 500°C for a period of approximately 10 to 30 minutes.

The present invention will now be described in detail by way of examples, which should not be construed as limiting the invention thereto. In the following working examples, the symbol "%" represents percent by weight.

The average particle diameter of titanium oxide particles and inorganic compound particles, interference color of a thin film, film hardness, and photocatalytic activity were measured or evaluated according to the following methods.

### (1) Average particle diameter

The average particle diameter of divided titanium oxide particles and inorganic compound particles were measured by a light-scattering particle size distribution measuring apparatus ("ELS-8000" supplied by Otsuka Electronics Co.).

### (2) Interference color

The interference color was evaluated by means of placing a thin film sample on a black background, reflecting fluorescent light on the surface of the thin film, and observing with the naked eye occurrence of a rainbow pattern induced by light interference. The evaluation results were expressed by the following three ratings A, B and C.
A: no rainbow pattern observed
B: faint rainbow pattern observed
C: clearly discernable rainbow pattern observed

### (3) Photocatalytic activity

The photocatalytic activity was evaluated by means of applying a few drops of red ink on a thin film sample, irradiating the sample with a black light with wavelength of 365 nm for 15 minutes at an ultraviolet ray strength of 1.0 mW/cm², and observing fading of the red ink by the naked eye. The evaluation results were expressed by the following four ratings A, B, C and C.
A: red ink disappears
B: red ink fades substantially
C: red ink fades slightly
D: Fading of red ink is not observed.

### (4) Film hardness

The film hardness was evaluated by a pencil scratch test conducted in accordance with JIS K-5400.

### Preparation of titanium oxide particles

Water was added to titanium tetrachloride (99.9% purity) to thereby prepare an aqueous titanium tetrachloride solution having a concentration of 0.25 mol/l (2% as reduced to titanium oxide). During preparation, a water-cooled system was used so as to prevent the temperature of the aqueous solution from elevating over 50°C. Then, the aqueous solution (1 liter) was placed in a reactor equipped with a reflux condenser, heated to a temperature near the boiling point (104°C), and maintained at that temperature for 60 minutes for undergoing hydrolysis, to thereby prepare an aqueous titanium oxide dispersion. After the aqueous dispersion was concentrated by decantation, an aqueous titanium oxide dispersion (A) having a titanium oxide concentration of 20% and a pH of 2, and an aqueous titanium oxide dispersion (B) having a titanium oxide concentration of 11% and a pH of 5.5 were obtained by an electrodialyzer G3 (supplied by Asahi Chemical Industry Co.). A portion of each sample was subjected to particle diameter measurement, and the average particle diameters were 0.02 µm and 0.05 µm, and specific surface areas were 122 m²/g and 80 m²/g, respectively.

### Example 1

To an aqueous dispersion (A) (25 g) of titanium oxide particles with an average particle diameter of 0.02 µm having a concentration of 20%, were added an aqueous zirconium hydroxychloride solution (1.25 g) with a concentration of 20% as reduced to zirconia and pure water (73.75 g). Aluminum oxide particles having an average secondary particle diameter of 0.2 µm (Alumina Oxide C, supplied by Nippon Aerosil Co.) (0.05 g) were added thereto. The mixture was dispersed thoroughly by an ultrasonic bath, to thereby prepare a coating composition.

The average secondary particle diameter of aluminum oxide particles was measured after the particles had been dispersed in pure water in advance.

The coating composition (2 ml) was applied onto a 76 X 26 mm soda lime glass plate, and an excessive residual composition was removed by allowing the coated glass to stand vertically for ten minutes, to thereby complete coating. The coated glass plate was dried with heat in a dryer maintained at 150°C, to thereby obtain a thin film sample.

The characteristics of the thin film sample were evaluated. The results are shown in Table 1.

### Example 2

A coating film was prepared in a manner similar to that employed in Example 1, except that the amount of aluminum oxide particles added was changed to 0.25 g when a coating composition was prepared. The film characteristics were evaluated. The results are shown in Table 1.

### Example 3

A coating film was prepared in a manner similar to that employed in Example 1, except that the amount of zirconium hydroxychloride solution with a concentration of 20% as reduced to zirconia was changed to 5 g when a coating composition was prepared. The film characteristics were evaluated. The results are shown in Table 1.

### Example 4

A coating film was prepared in a manner similar to that employed in Example 2, except that the amount of zirconium hydroxychloride solution with a concentration of 20% as reduced to zirconia was changed to 5 g when a coating composition was prepared. The film characteristics were evaluated. The results are shown in Table 1.

### Example 5

Aqueous ammonia was added to an aqueous dispersion (A) of titanium oxide particles having an average particle diameter of 0.02 µm, to thereby obtain an aqueous sol having a pH of 9. To the titanium oxide sol (25 g) having a titanium oxide concentration of 20%, were added an aqueous ammonium zirconium carbonate solution (1.25 g) with a concentration of 20% as reduced to zirconia and pure water (73.75 g). Then, aluminum oxide particles (0.05 g) having an average secondary particle diameter of 0.2 µm were added thereto. The mixture was dispersed thoroughly by an ultrasonic bath, to thereby prepare a coating composition.

A coating film was prepared in a manner similar to that employed in Example 1. The film characteristics were evaluated. The results are shown in Table 1.

### Comparative Example 1

To an aqueous dispersion (A) (25 g) containing titanium oxide particles having an average particle diameter of 0.02 µm at a concentration of 20%, were added an aqueous zirconium hydroxychloride solution (1.25 g) with a concentration of 20% as reduced to zirconia and pure water (73.75 g). Then, aluminum oxide particles having an average secondary particle diameter of 0.6 µm (AL-160G-3, supplied by Showa Denko K. K.) (0.05 g) were added thereto. The mixture was dispersed thoroughly by an ultrasonic bath, to thereby prepare a coating composition. The average secondary particle diameter of aluminum oxide particles was measured after the particles had been dispersed in pure water in advance.

A coating film was prepared in a manner similar to that employed in Example 1. The film characteristics were evaluated. The results are shown in Table 1.

### Comparative Example 2

To an aqueous dispersion (A) (25 g) containing titanium oxide particles having an average particle diameter of 0.02 µm at a concentration of 20%, were added a aqueous zirconium hydroxychloride solution (1.25 g) with a concentration of 20% as reduced to zirconia and pure water (73.3 g). An aqueous dispersion (0.45 g) of titanium oxide particles having an average secondary particle diameter of 0.05 µm (the aforementioned aqueous titanium oxide dispersion (B) having a concentration of 11%) was added thereto. The mixture was dispersed thoroughly by an ultrasonic bath, to thereby prepare a coating composition.

A coating film was prepared in a manner similar to that employed in Example 1. The film characteristics were evaluated. The results are shown in Table 1.

**Table 1**

| | Interference color | Photocatalytic activity | Pencil hardness |
|---|---|---|---|
| Example 1 | A | A | 4H |
| Example 2 | A | A | 4H |
| Example 3 | A | B | 6H |
| Example 4 | A | C | 6H |
| Example 5 | A | A | 4H |
| Comp.Ex. 1 | C | C | 4H |
| Comp.Ex. 2 | C | B | 4H |

### INDUSTRIAL APPLICABILITY

The thin film formed from the coating composition of the invention is characterized as exhibiting excellent photocatalytic activity and giving no interference color. Also, a thin film of enhanced hardness can be obtained by selecting an inorganic compound to be incorporated in the composition.

Thus, the coating composition of the invention is a material useful for forming a transparent thin film giving no interference color and exhibiting photocatalytic activity, on a variety of types of substrates such as window glass, front glass for an automobile, a fluorescent light, eyeglasses, and a display face.

## Claims

1. A photocatalytic titanium oxide coating composition comprising (a) titanium oxide particles exhibiting photocatalytic activity, (b) particles of an inorganic compound other than titanium oxide, or particles of an organic compound convertible to particles of said inorganic compound on firing, (c) a binder, and (d) a solvent, **characterized in that** the particles of the inorganic compound have an average particle diameter which is larger than that of the titanium oxide particles and falls within the range of 0.1 µm to 1.0 µm; the inorganic compound particles are insoluble in the solvent; and the amount of the inorganic compound particles is in the range of 0.5% to 7% by weight based on the weight of the titanium oxide particles;
wherein the titanium oxide particles have an average particle diameter of 0.004 µm to 0.1 µm.

2. The composition according to claim 1, wherein the particles of the inorganic compound are particles of at least one compound selected from aluminum oxide, silicon oxide, zinc oxide and zirconium oxide.

3. The composition according to claims 1 or 2, wherein the particles of the organic compound are particles of a salt of an organic acid and are convertible to particles of the inorganic compound on firing at a temperature of 250°C or higher.

4. The composition according to any one of claims 1 to 3, wherein the binder is a zirconium-containing compound or a phosphorus-containing compound.

5. The composition according to any one of claims 1 to 3, wherein the binder is a water-soluble or organic solvent-soluble zirconium-containing compound, and its amount is in the range of 3% to 30% by weight as reduced to zirconia (ZrO₂) based on the weight of the titanium oxide particles.

6. The composition according to any one of claims 1 to 3, wherein the binder is a phosphorus-containing compound, and its amount is in the range of 1% to 30% by weight as reduced to PO₄, based on the weight of the titanium oxide particles.

7. The composition according to any one of claims 1 to 6, wherein the solvent is at least one solvent selected from water and hydrophilic organic solvents.

8. The composition according to any one of claims 1 to 7, which further comprises 0.001% to 0.1% by weight, based on the weight of the composition, of a surface active agent.

9. An article comprising a substrate and a photocatalytic titanium oxide thin film formed on a surface of the substrate, which thin film is formed from a photocatalytic titanium oxide coating composition as claimed in any one of claims 1 to 8.

## Patentansprüche

1. Fotokatalytische Titanoxid-Beschichtungszusammensetzung, umfassend (a) Titanoxidteilchen, die fotokatalytische Aktivität aufweisen, (b) Teilchen einer anderen anorganischen Verbindung als Titanoxid, oder Teilchen einer organischen Verbindung, welche beim Brennen in Teilchen der anorganischen Verbindung umwandelbar sind, (c) ein Bindemittel und (d) ein Lösungsmittel, **dadurch gekennzeichnet, dass** die Teilchen der anorganischen Verbindung einen durchschnittlichen Teilchendurchmesser aufweisen, der größer ist als derjenige der Titanoxidteilchen und in den Bereich von 0,1 µm bis 1,0 µm fällt; wobei die Teilchen einer anorganischen Verbindung in dem Lösungsmittel unlöslich sind; und wobei die Menge der teilchen einer anorganischen Verbindung im Bereich von 0,5 Gew.-% bis 7 Gew.-% ist, bezogen auf das Gewicht der Titanoxidteilchen;
wobei die Titanoxidteilchen einen durchschnittlichen Teilchendurchmesser von 0,004 µm bis 0,1 µm aufweisen.

2. Zusammensetzung nach Anspruch 1, wobei die Teilchen der anorganischen Verbindung Teilchen mindestens einer Verbindung sind, ausgewählt aus Aluminiumoxid, Siliciumoxid, Zinkoxid und Zirkonoxid.

3. Zusammensetzung nach Anspruch 1 oder 2, wobei die Teilchen der organischen Verbindung Teilchen eines Salzes einer organischen Säure sind und beim Brennen bei einer Temperatur von 250°C oder höher in Teilchen der anorganischen Verbindung umwandelbar sind.

4. Zusammensetzung nach einem der Ansprüche 1 bis 3, wobei das Bindemittel eine Zirkon enthaltende Verbindung oder eine Phosphor enthaltende Verbindung ist.

5. Zusammensetzung nach einem der Ansprüche 1 bis 3, wobei das Bindemittel eine wasserlösliche oder eine in einem organischen Lösungsmittel lösliche Zirkon enthaltende Verbindung ist, wobei deren als Zirkondioxid (ZrO₂) gerechnete Menge im Bereich von 3 Gew.-% bis 30 Gew.-% ist, bezogen auf das Gewicht der Titanoxidteilchen.

6. Zusammensetzung nach einem der Ansprüche 1 bis 3, wobei das Bindemittel eine Phosphor enthaltende Verbindung ist, wobei deren als PO₄ gerechnete Menge im Bereich von 1 Gew.-% bis 30 Gew.-% ist, bezogen auf das Gewicht der Titanoxidteilchen.

7. Zusammensetzung nach einem der Ansprüche 1 bis 6, wobei das Lösungsmittel mindestens ein Lösungsmittel ist, das aus Wasser und hydrophilen organischen Lösungsmitteln ausgewählt ist.

8. Zusammensetzung nach einem der Ansprüche 1 bis 7, welche weiterhin 0,001 Gew.-% bis 0,1 Gew.-%, bezogen auf das Gewicht der Zusammensetzung, eines oberflächenaktiven Mittels enthält.

9. Gegenstand, welcher ein Substrat und eine(n) auf einer Oberfläche des Substrats gebildete(n) Dünnschicht/Dünnfilm aus fotokatalytischem Titanoxid aufweist, wobei die Dünnschicht/der Dünnfilm aus einer fotokatalytischen Titanoxid-Beschichtungszusammensetzung nach einem der Ansprüche 1 bis 8 gebildet ist.

## Revendications

1. Composition de revêtement d'oxyde de titane photocatalytique comprenant (a) des particules d'oxyde de titane présentant une activité photocatalytique, (b) des particules d'un composé inorganique différent de l'oxyde de titane, ou des particules d'un composé organique convertibles en particules dudit composé inorganique par chauffage, (c) un liant, et (d) un solvant, **caractérisée en ce que** les particules du composé inorganique ont un diamètre de particule moyen qui est supérieur à celui des particules d'oxyde de titane et est situé dans la plage de 0,1 µm à 1,0 µm ;
les particules de composé inorganique sont insolubles dans le solvant ; et la quantité des particules du composé inorganique est dans la plage de 0,5 % à 7 % en poids sur la base du poids des particules d'oxyde de titane ;
où les particules d'oxyde de titane ont un diamètre de particule moyen de 0,004 µm à 0,1 µm.

2. Composition selon la revendication 1 où les particules du composé inorganique sont des particules d'au moins un composé choisi parmi l'oxyde d'aluminium, l'oxyde de silicium, l'oxyde de zinc et l'oxyde de zirconium.

3. Composition selon la revendication 1 ou 2 où les particules du composé organique sont des particules d'un sel d'un acide organique et sont convertibles en particules du composé inorganique par chauffage à une température de 250°C ou plus.

4. Composition selon l'une quelconque des revendications 1 à 3 où le liant est un composé contenant du zirconium ou un composé contenant du phosphore.

5. Composition selon l'une quelconque des revendications 1 à 3 où le liant est un composé contenant du zirconium soluble dans l'eau ou soluble dans les solvants organiques, et sa quantité est dans la plage de 3 % à 30 % en poids à l'état réduit en zircone (ZrO₂) sur la base du poids des particules d'oxyde de titane.

6. Composition selon l'une quelconque des revendications 1 à 3 où le liant est un composé contenant du phosphore, et sa quantité est dans la plage de 1 % à 30 % en poids à l'état réduit en PO₄, sur la base du poids des particules d'oxyde de titane.

7. Composition selon l'une quelconque des revendications 1 à 6 où le solvant est au moins un solvant choisi parmi l'eau et les solvants organiques hydrophiles.

8. Composition selon l'une quelconque des revendications 1 à 7, qui comprend en outre 0,001 % à 0,1 % en poids, sur la base du poids de la composition, d'un agent tensioactif.

9. Article comprenant un substrat et un film mince d'oxyde de titane photocatalytique formé sur une surface du substrat, lequel film mince est formé à partir d'une composition de revêtement d'oxyde de titane photocatalytique selon l'une quelconque des revendications 1 à 8.
